# Europäisches Patentamt

## European Patent Office

## Office européen des brevets

(11) Veröffentlichungsnummer: **0 108 260**
**B1**

(12) **EUROPÄISCHE PATENTSCHRIFT**

(45) Veröffentlichungstag der Patentschrift:
08.03.89

(51) Int. Cl.⁴: **G 01 B 11/00**

(21) Anmeldenummer: 83109987.4

(22) Anmeldetag: 06.10.83

(54) Anlage zum Aufnehmen und bzw. oder Vermessen eines Gegenstandes.

(30) Priorität: 08.10.82 AT 3727/82
20.06.83 AT 2266/83

(43) Veröffentlichungstag der Anmeldung:
16.05.84 Patentblatt 84/20

(45) Bekanntmachung des Hinweises auf die Patenterteilung:
08.03.89 Patentblatt 89/10

(84) Benannte Vertragsstaaten:
AT CH DE FR GB IT LI SE

(56) Entgegenhaltungen:
DE-A-2 019 290
DE-B-2 555 975
US-A-3 513 321

(73) Patentinhaber: K E B A Gesellschaft m.b.H. & Co.,
Gewerbehof Urfahr, Halle C, A-4041 Linz/Do. (AT)

(72) Erfinder: Krippner, Gunther, Kühreiterweg 23,
A-4040 Linz (AT)
Erfinder: Kletzmaier, Karl, Dürnberg 63, A-4100
Ottensheim (AT)

(74) Vertreter: Wolke, Heidemarie, Dr., Stadtplatz 7,
A-4400 Steyr (AT)

EP 0 108 260 B1

## Beschreibung

Die Erfindung betrifft eine Anlage zum Aufnehmen und bzw. oder Vermessen eines Gegenstandes, insbesondere eines Holzstammes, entsprechend seinem Längsverlauf, mit einer Fördereinrichtung sowie mit einer Steuer- und Meßeinrichtung und ein entsprechendes Verfahren.

Bei einer bekannten Einrichtung zum Feststellen zw. Überwachen der Maße eines Gegenstandes - DE-AS-2 555 975 - weist eine optisch-elektrische Meßvorrichtung eine Abtasteinrichtung mit mehreren auf einer Meßfläche angeordneten strahlungsempfindlichen Elementen auf, welchen eine Strahlungsquelle zur Erzeugung eines Schattenbildes des Gegenstandes auf der Meßfläche zugeordnet ist. Um unabhängig von der Entfernung bzw. Lage des Holzstammes relativ zur Meßfläche bzw. zur Strahlungsquelle ein exaktes Meßergebnis zu erhalten, ist in einer senkrecht zur Meßfläche verlaufenden Ebene oder in einem voreinstellbaren Abstand von der Meßfläche eine Distanzmeßvorrichtung zur Feststellung der Distanz zwischen der Meßfläche und dem Gegenstand angeordnet. Damit können Veränderungen des Abstandes zwischen dem zu messenden Gegenstand bzw. der Meßfläche oder der dieser zugeordneten Strahlungsquelle erfaßt und somit äußerst genaue Meßergebnisse erhalten werden. Diese Meßeinrichtung hat sich in der Praxis bewährt, es hat sich jedoch gezeigt, daß bei einigen Anwendungsfällen mit der Meßgenauigkeit nicht das Auslangen gefunden werden kann.

Der vorliegenden Erfindung liegt die Aufgabe zugrunde, eine Anlage und ein Verfahren zum Feststellen bzw. Überwachen der Maße eines Gegenstandes der eingangs genannten Art zu schaffen, die sehr genau arbeitet, ein rasches Abtasten der Maße des Gegenstandes ermöglicht und eine Aufnahme der Naturmaße des Gegenstandes unter Berücksichtigung des Längsverlaufes ermöglicht. Darüberhinaus soll es möglich sein, die räumlichen Krümmungen des Gegenstandes, insbesondere eines Holzstammes zu erfassen, und den Gegenstand unter Beibehaltung seines natürlichen Längsverlaufes aufzunehmen.

Diese Aufgabe der Erfindung wird durch die Merkmale der Ansprüche 1, 2 bzw. 23 gelöst. Der Vorteil der Erfindung liegt darin, daß der Gegenstand während der Meßwertermittlung vom Wasser getragen wird und die korrekten Durchmesserwerte sowie der natürliche Verlauf eines zu messenden Gegenstandes, insbesondere eines Holzstammes, festgehalten werden. Die erfindungsgemäße Lösung erlaubt es in überraschend einfacher Weise, Meßfehler, die bei den meisten Meßvorrichtungen durch Verformungen der Gegenstände meist durch deren Eigengewicht auftreten, zu vermeiden bzw. auszuschalten und somit die von der Schwerkraft möglichst unbeeinflußte Kontur festzustellen.

Durch die exakte Erfassung des natürlichen Verlaufes des Gegenstandes, insbesondere eines Holzstammes, kann ein diesem optimal angepaßter Schneideplan ausgearbeitet werden, der ein Minimum an Verschnitt garantiert. Dadurch kann nicht nur die Wirtschaftlichkeit der Meßvorrichtung erhöht werden, sondern auch die von darauffolgenden Bearbeitungsvorgängen, wie beispielsweise Schneidevorgängen oder dgl. Darüberhinaus liegt ein weiterer Vorteil der Lösung darin, daß es möglich ist, den Gegenstand nicht nur in seiner entspannten und dem natürlichen Wachstum entsprechenden Lage im Wasserbad zu vermessen, sondern, daß es auch möglich ist, den Gegenstand in der seinem natürlichen Längsverlauf entsprechenden Lage aufzunehmen und diese Lage beim Herausheben aus dem Wasserbad beizubehalten, sodaß die Vermessung oder unter Umständen auch die unmittelbare Bearbeitung unter Beibehaltung des natürlichen Verlaufes auch außerhalb des Wasserbades durchgeführt bzw. eingeleitet werden kann.

Von besonderem Vorteil ist es weiters, wenn die über ein Schaltglied zur Meßwertermittlung aktivierte Meßeinrichtung sowie der sich im Wasserbad befindliche und vom Wasser getragene Gegenstand mittels der Fördereinrichtung relativ zueinander bewegt werden. Der Vorteil dieser Lösung liegt darin, daß der Gegenstand während der Meßwertermittlung vom Wasser getragen wird und durch die Relativbewegung die korrekten Durchmesserwerte über die Länge des Gegenstandes und entsprechend seinem natürlichen Verlauf ermittelt werden können.

Gemäß einer Weiterbildung der Erfindung ist vorgesehen, daß die Meßeinrichtung feststehend angeordnete Meßwertaufnehmer umfaßt und die Fördereinrichtung einen Längsvorschubantrieb umfaßt, mit dem der Gegenstand senkrecht zu der Meßfläche bewegbar ist. Da der Gegenstand durch das Wasserbad höhenmäßig geführt ist, ist es einfach, unter Ausnützung des Wasserbades diesen an der Meßeinrichtung vorbeizubewegen, wobei es möglich ist, einen gewünschten Seitenabstand der Mittellängsachse des Gegenstandes von den Meßwertaufnehmern einzuhalten, sodaß zusätzliche Distanzvorrichtungen zwischen dem Gegenstand und dem Meßwertaufnehmer eingespart werden können.

Nach einem weiteren Ausführungsform der Erfindung ist vorgesehen, daß die Fördereinrichtung zwei in Längsrichtung voneinander distanzierte Vorrichtungen zum Erfassen des Gegenstandes, insbesondere Greifer umfaßt, die mit dem Längsvorschubantrieb gekoppelt sind und daß über das Schaltglied gleichzeitig mit der Meßeinrichtung von der Fördereinrichtung der Längsvorschubantrieb und gegebenenfalls ein Hubantrieb mit einer dem Greifergewicht entsprechenden Kraft beaufschlagt ist. Die beiden Greifer ermöglichen ein parallel es Führen des Gegenstandes im Wasserbad, wobei gegebenenfalls Nachteile bzw. Verfälschungen des Meßergebnisses durch das Gewicht der Greifervorrichtung durch eine entsprechende Ausbildung der Greifer mit Schwimmkörpern oder durch Beaufschlagung der Hubantriebe ausgeglichen bzw. vermieden werden.

Im Rahmen der Erfindung ist es auch möglich, daß einer oberhalb der Wasseroberfläche befindlichen Oberseite des Gegenstandes außerhalb des Wasserbades angeordnete Meßwertaufnehmer zugeordnet sind, wodurch in Verbindung mit den an den Unterseiten des Gegenstandes anliegenden Stützgliedern neben einer exakten Feststellung des Längsverlaufes zweier Seiten des Gegenstandes gegenüber einer Bezugsgeraden auch die Dickenabmessung des Gegenstandes, beispielsweise der Durchmesser, ermittelt werden kann.

Weiters ist es auch möglich, daß die Fördereinrichtung mit Längspositioniervorrichtungen versehen ist, und daß einige Meßwertaufnehmer unterhalb der Wasseroberfläche, insbesondere innerhalb des Wasserbades und einige über der Wasseroberfläche angeordnet und mit einer Längsvorschubvorrichtung verbunden sind, wodurch eine Meßwerterfassung in exakt definierten Längsbereichen eines Gegenstandes, wie dies beispielsweise zur Volumenberechnung bei Holzstämmen erforderlich ist, erreicht wird. Durch die Anordnung von Meßwertaufnehmern ober- und unterhalb der Wasseroberfläche ist eine einwandfreie Meßwertermittlung auch dann möglich, wenn nicht der gesamte Gegenstand im Wasser eingetaucht ist.

Eine weitere Ausführungsform der Erfindung sieht vor, daß das Wasserbad durch einen Kanal oder ein Becken gebildet ist, in dessen Seitenwände zumindest im Bereich der Meßwertaufnehmer transparente Fenster angeordnet sind. Dies ermöglicht eine Anordnung der Meßeinrichtung im Trockenen, wodurch die Wartung vereinfacht und die Standzeit der Einrichtung zusätzlich erhöht wird.

Vorteilhaft ist es weiters, wenn der Längsvorschubantrieb der Fördervorrichtung durch eine vorzugsweise veränderbare Wasserströmung, z. B. Strömungsdüsen mit einer Hochdruckpumpe, gebildet ist. Damit kann das Medium, welches die Höhenführung des Gegenstandes im Bereich der Meßvorrichtung übernimmt, auch zugleich die Vorschubbewegung bewirken, und es können mechanische Vorrichtungen eingespart werden. Von Vorteil ist eine derartige Anlage vor allem bei der Vermessung von Holzstämmen bzw. Holzbauteilen, wenn diese über Wasserläufe zugeführt oder in Wasserbecken zwischengelagert werden.

Im Rahmen der Erfindung ist es auch möglich, daß die Meßeinrichtung durch eine Strahlungsquelle und mit dieser zusammenwirkende strahlungsempfindliche Elemente gebildet ist, wobei der Gegenstand zwischen Strahlungsquelle und den Elementen hindurch bewegbar ist. Diese Ausführungsform zeichnet sich durch eine Addition der Vorteile der erfindungsgemäßen Einrichtung mit den Vorteilen der hohen Meßgenauigkeit von derartigen mit Strahlungsquellen zusammenarbeitenden Meßwertaufnehmern aus.

Von Vorteil ist eine Ausführungsform, bei der die Meßeinrichtung mechanische Meßwertaufnehmer, insbesondere elektromechanische Wandler, aufweist, und daß die Wandler in- und außerhalb des Wassers im Umfangsbereich des zu messenden Gegenstandes angeordnet sind und daß vorzugsweise diese Wandler Fühlerarme aufweisen, die vorzugsweise in ihren Endbereichen mit Roll- bzw. Gleitelementen versehen sind. Diese Meßeinrichtung hat den Vorteil, daß im Wasserbad schwimmende Rindenteile bzw. abgespaltene Holzstücke, Zunder oder dgl. das Meßergebnis nicht nachteilig beeinflussen können.

Weiters ist es auch möglich, daß die Meßeinrichtung eine, durch einen Laser gebildete Strahlungsquelle umfaßt. Diese Ausführungsform zeichnet sich durch die hohe Kohärenz der Laserstrahlung aus, die auch bei trübem Wasser eine äußerst exakte Meßwertermittlung ermöglicht.

Schließlich ist es im Rahmen der Erfindung auch vorteilhaft, wenn der Meßeinrichtung bzw. den Seitenwänden vorzugsweise im Bereich der Fenster, eine Reinigungsvorrichtung zugeordnet ist und daß vorzugsweise dem Wasserbad eine Absonderungseinrichtung für Schwebekörper, insbesondere Holzrinden, zugeordnet ist, da dadurch der Bereich, in dem die Meßwertaufnehmer angeordnet sind, von Ablagerungen und Verschmutzungen frei gehalten wird und unterschiedliche Helligkeitsverhältnisse das Meßergebnis nicht verfälschen können.

Gemäß einer weiteren Ausführungsform der Erfindung ist vorgesehen, daß die Aufnahmeeinrichtungen in einer parallel zur und unterhalb einer Wasseroberfläche verlaufenden Ebene angeordnet und auf der Fördereinrichtung bzw. einer Wand des Wasserbades gelagert sind und deren Stützglieder Abstützvorrichtungen mit in Richtung des Gegenstandes wirkenden Antrieben zugeordnet sind und über die Steuereinrichtung bedarfsweise in ihrer Stellung fixierbar sind. Durch die Fixierung der Abstützvorrichtungen in ihrer an den natürlichen Längsverlauf des Gegenstandes angepaßten Lage, während der Gegenstand frei schwimmt, kann der Längsverlauf auch nach dem Herausheben des Gegenstandes aus dem Wasserbad unter dem Einfluß der Schwerkraft unverändert beibehalten werden.

Von Vorteil ist es weiters, wenn die Abstützvorrichtungen durch Kolbenzylinder-Anordnungen gebildet sind, die insbesondere über eine Ventilanordnung mit einer Druckmittelquelle verbunden sind, da damit eine einfache und betriebssichere Vorrichtung geschaffen werden kann.

Gemäß einer anderen Ausführungsform ist die Druckmittelquelle durch einen Druckmittelspeicher gebildet, wobei vorzugsweise als Druckmittel Luft verwendet wird, und es sind den Aufnahmeeinrichtungen mit der Steuereinrichtung wirkverbundene Bremsvorrichtungen, insbesondere für die Stützglieder, zugeordnet. Durch ein derartiges System kann die Verstellkraft der Aufnahmeeinrichtungen auf ein Minimum abgesenkt werden, sodaß durch den Einfluß der Verstellkraft der Aufnahmeeinrichtungen der natürliche Längsverlauf des Gegenstandes nicht nachteilig beeinflußt wird und trotzdem nach dem erfolgten Anpassen der Aufnahmevorrichtungen an den Längsverlauf des Gegenstandes das teilweise hohe Gewicht derartiger Gegenstände beispielsweise von sehr langen Baumstämmen, einwandfrei aufgenommen wird. Die Lage der Aufnahmevorrichtungen kann nämlich durch die Bremsvorrichtungen nicht verändert werden.

Nach einer weiteren Ausführungsform der Erfindung ist vorgesehen, daß die den Stützgliedern zugeordneten Abstützvorrichtungen unabhängig voneinander, im wesentlichen senkrecht zur Wasseroberfläche, verstellbar sind und daß die Stützglieder auf einer Führungsbahn in einer parallel zur Wasseroberfläche verlaufenden Ebene quer zur Längsrichtung des Gegenstandes verstellbar und mit einem Blockierantrieb, der vorzugsweise auf der Abstützvorrichtung gelagert ist, verbunden sind, wodurch sich der Gegenstand während des Anlegens der Stützglieder in mehreren Raumrichtungen frei bewegen kann und auch die senkrecht zur Vertikalen vorhandenen Verformungen eines Gegenstandes berücksichtigt werden können.

Vorteilhaft ist es weiters, wenn die Meßwertaufnehmer der Meßeinrichtung den Stützgliedern der Aufnahmeeinrichtungen zugeordnet oder durch diese gebildet sind und in einer vertikalen, parallel zur und gegebenenfalls senkrecht zur Längsrichtung des Gegenstandes verlaufenden Ebene angeordnet sind, da dadurch eine Aufnahme und Feststellung der Krümmungsverhältnisse im Längsverlauf eines Gegenstandes in zueinander unterschiedlichen Ebenen möglich ist.

Weiters ist es erfindungsgemäß auch vorgesehen, daß die Summe der Verstellkräfte der Abstützvorrichtungen geringer ist als die Auftriebskraft des Gegenstandes bzw. zumindest größer als die auf den Stützgliedern lastende Wassersäule, wodurch einerseits Verfälschungen des natürlichen Längsverlaufes des Gegenstandes vermieden und andererseits sichergestellt wird, daß die Stützglieder sich einwandfrei in ihre Ausgangs- bzw. Ruhelage innerhalb des Nasserbades zurückstellen können. Vorteilhaft ist es weiters, wenn den Stützgliedern Auftriebskörper zugeordnet sind, da dadurch die Auftriebskraft des Wassers gleichzeitig zur Verstellung der Stützglieder in ihre jeweilige Ruhestellung ausgenutzt werden kann.

Nach einer weiteren Ausführungsform der Erfindung ist vorgesehen, daß die Aufnahmeeinrichtungen einen Teil der Fördereinrichtung für den Gegenstand bilden und auf einem verwindungssteifen Traggerüst angeordnet sind, welches auf einer Förderbahn gelagert und mit einem Längsvorschubantrieb verbunden ist, und daß im Zuge der Förderbahn die Meßwertaufnehmer der außerhalb des Wasserbades angeordneten Meßeinrichtung sich in einer senkrecht zur Förderrichtung verlaufenden Meßebene befinden. Vorteilhaft ist dabei, daß der Gegenstand in seiner natürlichen Lage aus dem Wasserbad herausgehoben und außerhalb des Wasserbades mit üblichen Meßeinrichtungen vermessen werden kann, wobei das Traggerüst gleichzeitig zum Transport des Gegenstandes durch die Meßfläche einer derartigen Meßeinrichtung Verwendung finden kann.

Weiters ist es auch möglich, daß eine aus Meßwertaufnehmern gebildete Meßeinrichtung, insbesondere außerhalb des Wasserbades angeordnet ist und die Steuereinrichtung ein über ein Verzögerungsglied verbundenes Einschaltglied aufweist, wobei das Verzögerungsglied und die Ventilanordnung für die Abstützvorrichtungen gleichzeitig beaufschlagt ist, wodurch sichergestellt ist, daß der Gegenstand zuerst in seiner natürlichen Lage festgehalten wird und danach erst der Meßvorgang einsetzt.

Im Rahmen der Erfindung ist es dabei auch möglich, daß die Meßwertaufnehmer entlang einer Förderbahn einer Fördereinrichtung mit einem Verstellantrieb verfahrbar sind, wodurch der Ablauf des Meßvorganges vereinfacht werden kann.

Die Vorteile des erfindungsgemäßen Verfahrens liegen vor allem darin, daß der Holzstamm durch den Wegfall der Einwirkung von äußeren Kräften bzw. der Belastung durch seine eigene Masse eine annähernd seinem natürlichen Längsverlauf entsprechende Stellung einnimmt. Dadurch ist es möglich, Verwerfungen bzw. Krümmungen des Gegenstandes in mehreren Raumrichtungen einwandfrei festzustellen und das Schneideprogramm zum Zerschneiden derartiger Gegenstände, beispielsweise von Holzstämmen oder Blockholz, entsprechend zu steuern, sodaß mit einem minimalen Verschnitt bzw. Abfall gearbeitet werden kann.

Weiters ist es auch möglich, daß den Stützgliedern Meßwertaufnehmer zugeordnet sind und mit diesen der Längsverlauf bzw. die Längskontur des Gegenstandes in mehreren aufeinanderfolgenden Bereichen gegenüber einer gedachten Bezugsgeraden ermittelt wird, worauf die optimale Einspannposition für eine Bearbeitungsmaschine, z. B. eine Furnierschälmaschine bzw. ein Sägegatter festgelegt wird, worauf mit einer sehr wirtschaftlichen Einrichtung der Längsverlauf des Gegenstandes mit einer gewünschten Bezugslage vergleichbar ist.

Schließlich ist es im Rahmen der Erfindung auch möglich, daß der Gegenstand mit der Aufnahmeeinrichtung aus dem Wasserbad herausgehoben und entlang einer definierten Bezugsgerade einer Meßvorrichtung zum Feststellen der Abweichungen der Oberfläche in mehreren Raumrichtungen relativ zu der Bezugsgeraden sowie gegebenenfalls zur Feststellung des Durchmessers des Gegenstandes und der zu vermessende Gegenstand relativ zueinander verstellt werden. Diese Ausführungsform ermöglicht eine Vereinfachung bei der Vermessung der Gegenstände, da diese in ihrer annähernd natürlichen Lage außerhalb des Wasserbades vermessen werden können.

Zum besseren Verständnis der Erfindung wird diese im folgenden anhand der in den Zeichnungen dargestellten Ausführungsbeispiele näher erläutert.

Es zeigen:

Fig. 1   eine Anlage zum Aufnehmen und Vermessen eines Gegenstandes in vereinfachter schematischer schaubildlicher Darstellung;

Fig. 2   eine Ausführungsvariante einer erfindungsgemäßen Anlage, bei der die Meßeinrichtung zum Vermessen eines Gegenstandes außerhalb des Wasserbades angeordnet ist, ebenfalls in stark vereinfachter schematischer Darstellung;

Fig. 3   die Anlage nach Figur 2 in Stirnansicht geschnitten, gemäß den Linien III - III in Fig. 2;

Fig. 4   eine erfindungsgemäße Anlage zum Feststellen bzw. Überwachen der Maße eines Gegenstandes in schaubildlicher Darstellung;

Fig. 5   eine andere Ausführungsform einer erfindungsgemäßen Anlage mit einer verfahrbaren Meßeinrichtung in schaubildlicher Darstellung;

Fig. 6   eine Stirnansicht einer erfindungsgemäßen Anlage mit einer Meßeinrichtung, die mechanische Meßwertaufnehmer aufweist.

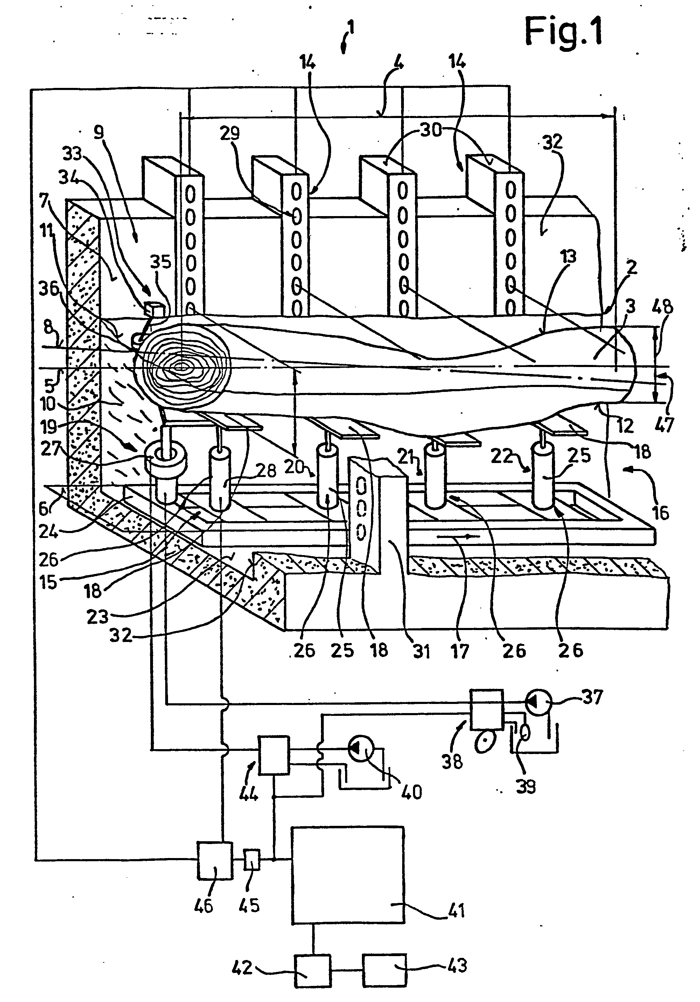

In Figur 1 ist eine Anlage 1 zum Aufnehmen und bzw. oder Vermessen eines Gegenstandes 2, insbesondere eines Holzstammes 3, dargestellt. Der Holzstamm 3 weicht in seinem Längsverlauf 4 bedingt durch das natürliche Wachstum von einem idealen geradlinigen Verlauf einer Bezugsgerade 5 bzw. eine Bezugsebene 6 bzw. 7 durch Krümmungen, Verwerfungen oder Verwindungen ab.

Für die Bearbeitung derartiger Gegenstände 2 bzw. Holzstämme 3 ist es nun, um eine optimale Ausnutzung dieser Gegenstände 2 zu ermöglichen, erforderlich, diese Abweichungen von dem gewünschten Soll-Verlauf gegenüber der Bezugsgeraden 5 bzw. den Bezugsebenen 6, 7 festzustellen, um daraus für jeden Gegenstand 2 eine den nachfolgenden Bearbeitungsvorgängen optimal angepaßte und auf den Stammverlauf eines Holzstammes 3 oder eines anderen Gegenstandes abgestellte Optimierungsgerade 8 zu ermitteln. Durch das Ermitteln einer den jeweils nachfolgenden Bearbeitungsvorgängen optimal angepaßten Optimierungsgerade 8 soll der Verschnitt, beispielsweise beim Schneiden von Blockholz bzw. der Abfall beim Furnierschälen oder bei ähnlichen Vorgängen, verringert werden. Der Gegenstand 2 bzw. der Holzstamm 3 kann dann unter Zugrundelegung der errechneten Optimierungsgeraden 8 in die nachfolgende Bearbeitungsmaschine eingespannt oder entsprechend bearbeitet werden, sodaß eine Wirtschaftliche Verwertung des derart vermessenen Gegenstandes 2 sichergestellt ist.

Soll eine zufriedenstellende Ermittlung des Längsverlaufes 4 des Gegenstandes 2 erreicht werden, ist es erforderlich, daß der Gegenstand 2 möglichst ohne äußere Krafteinwirkung seinen natürlichen Längsverlauf einnehmen kann. Bei Gegenständen 2, die schwimmfähig sind, insbesondere bei Holzstämmen 3, ist daher gemäß der Erfindung vorgesehen, daß diese Holzstämme 3 in einem Wasserbad 9 im Wasser 10 frei schwimmen können. Dabei richtet sich der Holzstamm 3 automatisch nach seinem Schwerpunktverlauf aus, sodaß üblicherweise die größeren Abweichungen von der Bezugsgeraden 5 in einer zur Bezugsebene 7 parallel verlaufenden, zu einer Wasseroberfläche 11 senkrechten Ebene auftreten. Zum Erfassen der Krümmungen in dieser Ebene bzw. des Längsverlaufes des Gegenstandes 2 sind einer unterhalb der Wasserobfläche 11 befindlichen Unterseite 12 und einer oberhalb der Wasseroberfläche befindlichen Oberseite 13 des Gegenstandes 2 Meßeinrichtungen 14, 15 zugeordnet. Um die üblicherweise im Wasser auftretenden Schwankungen des Gegenstandes während des Meßvorganges auszuschalten, ist eine Aufnahmeeinrichtung 16 angeordnet, die mehrere in Längsrichtung - Pfeil 17 - des Gegenstandes 2 hintereinander angeordnete Stützglieder 18 umfaßt. Diese sind beim dargestellten Ausführungsbeispiel über Abstützvorrichtungen 19 bis 22 in einem auf einer Wand 23 des Wasserbades 9 aufliegenden Traggerüst 24 gelagert. Die Abstützvorrichtungen 19 bis 22 weisen beispielsweise durch Kolbenzylinder-Anordnungen 25 gebildete Antriebe 26 sowie Bremsvorrichtungen 27 auf, von welchen der besseren Übersichtlichkeit nur die der Abstützvorrichtung 19 zugeordnete gezeigt ist, auf. Mit diesen Aufnahmeeinrichtungen 16 ist es nunmehr möglich, nachdem der Gegenstand 2 im Wasser 10 frei schwimmend annähernd seinen natürlichen Längsverlauf 4 eingenommen hat, diesen Verlauf durch kraftfreies Anlegen der Stützglieder 18 an der Unterseite 12 des Gegenstandes 2 zu erfassen und durch das Blockieren der dabei eingenommenen Stellung der Antriebe 26 über die Bremsvorrichtungen 27 diese Position über die Dauer des Meßvorganges gleich zu halten. Zum Ermitteln der Abweichungen des Längsverlaufes 4 des Gegenstandes 2 von der Bezugsebene 6 können parallel zu den Antrieben 26 Meßwertaufnehmer 28 angeordnet sein, die den Abstand zwischen dem Traggerüst 24 und den Stützgliedern 18 ermitteln. Die Anzahl der Stützglieder über den Längsverlauf 4 des Gegenstandes 2 kann dabei an die gewünschte Genauigkeit des Meßergebnisses angepaßt werden. Zum Feststellen des Verlaufes der Oberseite 13 des Gegenstandes 2 dienen die ebenfalls in Längsrichtung - Pfeil 17 - des Gegenstandes 2 im Abstand voneinander angeordneten Meßeinrichtungen 14, die elektrooptische bzw. elektronische Meßwertaufnehmer 29 umfassen. Beim dargestellten Ausführungsbeispiel bestehen diese Meßeinrichtungen 14 aus einer Senderanordnung 30 und einer auf der gegenüberliegenden Wand des Wasserbades 9 angeordneten Empfängeranordnung 31, von welchen der besseren Übersichtlichkeit halber nur eine dargestellt ist. Durch Aufbau eines optischen Strahlenganges bzw. eines Kraftfeldes zwischen der Senderanordnung 30 und der Empfängeranordnung 31 wird die Oberseite des mit den Aufnahmeeinrichtungen 16 ruhig gehaltenen Gegenstandes 2 abgetastet.

Dabei ist es vorteilhaft, wenn der Gegenstand 2 mit dem Traggerüst 24 von der Wand 23 des Wasserbades abgehoben und gegenüber der Wasseroberfläche 11 zumindest geringfügig angehoben wird, sodaß er während des Meßvorganges durch die Wirkung der Auftriebskraft nicht von den Stützgliedern abgehoben werden kann.

Zum Feststellen der Abweichung gegenüber der Bezugsebene 7, also in der zur Ober- und Unterseite senkrechten Richtung, sind an einer Wand 32 des Wasserbades 9 Meßeinrichtungen 33 angeordnet, die durch elektromechanische Wandler 34 gebildet sind, deren Fühlerarme 35 über Rollen 36 an den Seitenflächen des Gegenstandes 2 anliegen. Werden diese Meßvorrichtungen 33 an den beiden vertikalen Wänden 32 des Wasserbades befestigt, so ist durch Differenzbildung der beiden Meßergebnisse zusätzlich zum Feststellen der Abweichungen des Gegenstandes von der Soll-Bezugsgerade 5 ebenso wie zwischen den Meßvorrichtunger 14 und 15, die Breite und Höhe bzw. Dicke, oder wie beim vorliegenden Fall der Durchmesser des Holzstammes 3 ermittelbar.

Es sei lediglich erwähnt, daß die bei Holzstämmen 3 vorkommenden Krümmungen zum besseren Verständnis der vorliegenden Erfindung im vorliegenden und nachfolgenden Ausführungsbeispiel stark übertrieben dargestellt sind. Zur Versorgung der Antriebe 26 der Aufnahmeeinrichtung 16 ist eine Druckmittelquelle 37 vorgesehen, mit der Druckmittel, vorzugsweise Luft, den Kolbenzylinder-Anordnungen 25 zugeführt werden kann. Überdies ist es über eine Ventilanordnung 38 möglich, daß Druckmittel beispielsweise mit einem über eine Steuernocke mechanisch angetriebenen Drehschieber in Schwingungen zu versetzen, sodaß vor dem Fixieren des Gegenstandes 2 in seiner dem natürlichen Verlauf nächstkommenden Stellung dieser in Schwingungen versetzt werden kann. Dadurch lösen sich die inneren Spannungen im Gegenstand 2. Nach dieser Vibrationsbeaufschlagung des Gegenstandes 2 können die Antriebe über die Ventilanordnung 38 mit einem Druckmittelspeicher 39 zusammengeschaltet sein, sodaß sie mit geringer Kraft in Richtung der Wasseroberfläche 11 beaufschlagt sind. Nach einem aus Erfahrungswerten abzuschätzenden Zeitintervall werden dann die einzelnen Stützglieder 18 durch Beaufschlagung der Bremsvorrichtung 27 über eine weitere Druckmittelpumpe 40 in der der jeweiligen Stellung des Antriebes 26 entsprechenden Position fixiert. Danach kann von der Steuereinrichtung 41, von der auch die Ventilanordnung 38, die Druckmittelquelle 37 sowie die Druckmittelpumpe 40 versorgt werden, der Meßvorgang mit den Meßeinrichtungen 14, 15 und 33 eingeleitet, und es können die gewünschten Meßwerte ermittelt werden. Mit einer an die Steuereinrichtung 41 angeschlossenen Auswerteeinheit 42 können in Verbindung mit einem Datenspeicher 43, die aufgrund der ermittelten Meßwerte in Verbindung mit dem gewünschten Bearbeitungsprogramm abgestimmten Optimierungsgeraden 8 festgelegt werden. Handelt es sich bei den Gegenständen 2 um Holzstämme 3 die in einer nachfolgenden Bearbeitungsmaschine entsprechend dem Verlauf der Optimierungsgeraden 8 eingespannt werden soll, ist es zweckmäßig, in der dem natürlichen Verlauf entsprechenden Stellung Positionsmarken bzw. Zentrierbohrungen anzubringen. Dadurch wird der Einspannvorgang an den Bearbeitungsvorrichtungen entsprechend erleichtert und sichergestellt, daß der Baumstamm 3 in der gewünschten Position an der Maschine eingespannt wird.

Von der Steuereinrichtung 41 werden über einen gemeinsamen Ausgang die Ventilanordnung 38 bzw. eine Ventilanordnung 44 für die Bremsvorrichtung 27 und ein Verzögerungsglied 45 gleichzeitig beaufschlagt. Dadurch wird erreicht, daß über die Zeitdauer, die am Verzögerungsglied 45 eingestellt wird, der Holzstamm 3 in einer dem natürlichen Längsverlauf entsprechenden Lage mit den Stützgliedern 18 fixiert werden kann und erst anschließend, wenn durch das Verzögerungsglied nach Ablauf der eingestellten Zeitdauer das Einschaltglied 46 beaufschlagt wird, die Meßvorrichtungen 14 bzw. 15 mit dem Feststellen des Längsverlaufes 4 bzw. der Abmessungen 47, z. B. dem Durchmesser 48, beginnen.

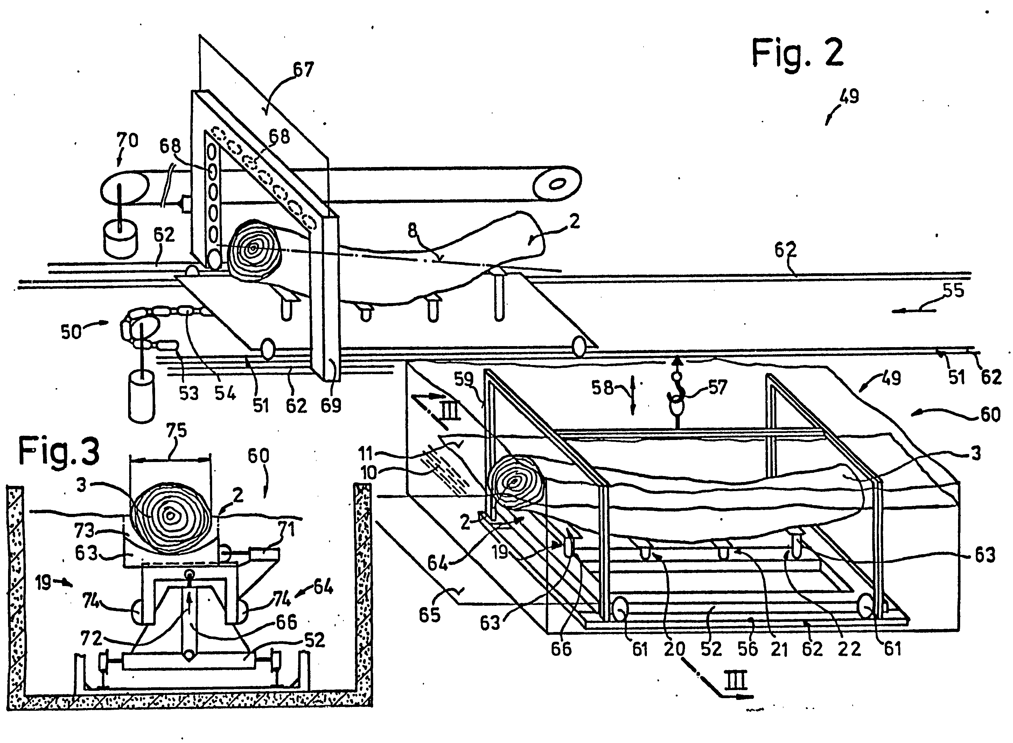

In Figur 2 ist eine Anlage 49 gezeigt, bei der eine Fördereinrichtung 50 eine Förderbahn 51 umfaßt, entlang der Gegenstände 2, insbesondere Holzstämme 3, auf einem Traggerüst 52 mittels eines schematisch angedeuteten Längsvorschubantriebes 53, z. B. einer Förderkette 54, in Förderrichtung - Pfeil 55 - entlang der Förderbahn 51 bewegt werden. Ein Teilbereich 56 der Förderbahn 51 ist in einem beispielsweise über einen Kran 57 in Richtung des Doppelpfeiles 58 höhenverstellbaren Förderkorb 59 angeordnet. Dieser Förderkorb 59 befindet sich im Bereich eines Wasserbades 60, welches zu einem Teil mit Wasser 10 gefüllt ist. Die Hubhöhe des Förderkorbes 59 reicht aus, um den Teilbereich 56 der Förderbahn 51 mit dem daraufliegenden Gegenstand 2 unterhalb einer Wasseroberfläche 11 abzusenken. Das den Gegenstand 2 aufnehmende Traggerüst ist mit Rädern 61 auf Schienen 62 der Förderbahn 51 verfahrbar. Auf diesem Traggerüst 52 sind die Gegenstände 2 über mehrere in Förderrichtung - Pfeil 55 - im Abstand hintereinander angeordnete Stützglieder 63 abgestützt. Diese Stützglieder 63 einer Aufnahmeeinrichtung 64 sind in ihrer Stellung gegenüber dem eine Bezugsebene 65 bildenden Traggerüst 52 über Antriebe 66 einstell- und fixierbar gelagert. Der an das Wasserbad 60 anschließende Teil der Förderbahn 51 führt durch eine senkrecht zur Förderrichtung - Pfeil 55 - angeordnete Meßebene 67. Meßwertaufnehmer 68, beispielsweise im Infrarot-Bereich arbeitende Lichtsender bzw. Lichtempfänger, sind in einer portalartigen Meßeinrichtung 69 angeordnet, die mit einem Verstellantrieb 70 entlang der Führungsbahn 51 der Fördereinrichtung 50, beispielsweise auf einer ebenfalls durch Schienen 62 gebildeten Förderbahn verstellbar sein können.

In Figur 3 ist das Traggerüst 52 im größeren Maßstab dargestellt. Hierbei ist ersichtlich, daß die Stützglieder 63 der Aufnahmeeinrichtung 64 gegenüber den Antrieben 66 auch in der Bezugsebene 65, jedoch quer zur Förderrichtung - Pfeil 75 - frei verstellbar gelagert sind, um eine freie Beweglichkeit des Gegenstandes 2 während des Anlegens der Stützglieder 63 im Wasserbad 60 sicherzustellen. Um die im Wasserbad festgestellte und erhaltene Position der Stützglieder 63 beim Transport außerhalb desselben beibehalten zu können, ist den Stützgliedern auch ein in derselben Richtung wirksamer Blockierantrieb 71 zugeordnet.

Der Verfahrensablauf bei Verwendung einer erfindungsgemäßen Anlage 49 ist nun folgendermaßen:

Der Gegenstand 2, beispielsweise ein Holzstamm 3, wird von einem Rundholzsortierplatz oder Rundholzlager oder dgl. entnommen und auf die in gleicher Höhe justierten Stützglieder 63 des Traggerüstes 52 aufgelegt. Dann wird das Traggerüst 52 mit der Fördereinrichtung 50 in den Bereich des Förderkorbes 59 verbracht, wobei die Schienen 62 im Teilbereich 56 der Förderbahn 51 sich in fluchtender Lage zu den Schienen 62 außerhalb des Wasserbades 60 befinden. Daran anschließend wird der Förderkorb 59 mit dem Kran 57 soweit in das Wasserbad 60 abgesenkt, daß sich das Traggerüst 52 unterhalb der Wasseroberfläche 11 befindet und der Gegenstand 2 im Wasser 10 frei schwimmen kann. Dazu werden gegebenenfalls die Stützglieder 63 mittels der Antriebe 66 in eine untere Endstellung verfahren. Daran anschließend werden die Antriebe 66 mit einer geringfügigen Verstellkraft 72 beaufschlagt, die jedoch geringer ist als das Gewicht der mit dünnen strichpunktierten Linien angedeuteten, auf der Oberfläche der Stützglieder 63 lastenden Wassersäule 73. Die Summe der Verstellkräfte 72 der Antriebe 66 der gesamten Aufnahmeeinrichtung 64 dürfen jedoch in Summe nicht so groß sein, daß sie zu einer Veränderung der Relativlage des Gegenstandes 2 führen. Sind die Stützglieder 63 sowohl senkrecht als auch parallel zur Bezugsebene 65 ausgerichtet und am Gegenstand 2 angelegt, so werden sie in ihrer Stellung blockiert bzw. wird die seitliche Stellung der Stützglieder 63 mit den Blockierantrieben 71 fixiert. Dadurch ist der Holzstamm nun in seinem, seinem natürlichen Längsverlauf entsprechenden, durch den natürlichen Wuchs entstandenen Krümmungen oder dgl. angepaßten Verlauf unterstützt und kann in einer diesem natürlichen Längsverlauf entsprechenden Lage aus dem Wasserbad 60 herausgehoben werden. Daran anschließend wird das Traggerüst 52 mit der Fördereinrichtung 50 durch die Meßebene 67 hindurchbewegt, wobei der exakte Verlauf des Gegenstandes 2 in mehreren, beispielsweise unter 90° versetzten Richtungen mittels der Meßwertaufnehmer 68 auf elektrischem bzw. elektronischem Weg festgestellt werden kann. Aus dem derart erhaltenen Meßergebnis kann eine Optimierungsgerade 8, die eine bestmögliche Ausnützung des Gegenstandes 2 bei dessen Weiterverarbeitung ermöglicht, festgelegt werden. Unter Umständen ist es weiters auch möglich, daß der Gegenstand in seiner am Traggerüst 52 fixierten Lage unmittelbar einer nachfolgenden Bearbeitungsmaschine zugeführt wird.

Die Fördereinrichtung 50 kann mit den einzelnen Traggerüsten 52 auch lösbar verbunden sein, sodaß das Absenken in das Wasserbad 60 nicht gestört wird und außerdem mehrere Traggerüste entlang der Förderbahn 51 bewegt werden können.

Zur Verstellung der Stützglieder 18, 63 nach dem Abheben des Gegenstandes 2 von den Abstützvorrichtungen 19 bis 22 können die Stützglieder 18, 63 mit Auftriebskörpern 74 versehen sein. Diese können zum Verstellen der Stützglieder 18, 63 entsprechend mit Druckmittel beaufschlagt bzw. geflutet oder entleert werden.

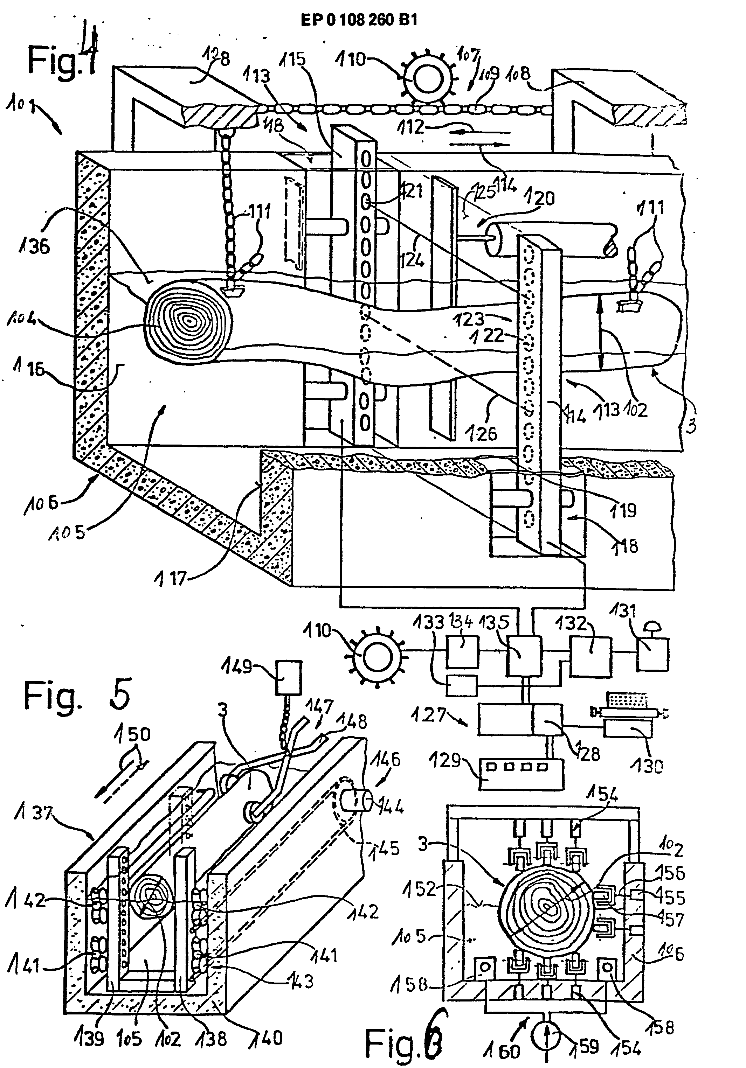

In Figur 4 ist eine Anlage 101 zum Feststellen bzw. Überwachen der Maße 102 eines Gegenstandes, beispielsweise des Durchmessers eines Holzstammes 3, dargestellt. Zur Vorwärtsbewegung des Holzstammes 3 innerhalb eines Wasserbades 105, wenn es z. B. in einem gemauerten Kanal 106 angeordnet ist, ist eine Fördereinrichtung 107 angeordnet. Diese umfaßt zwei portalartige Laufkatzen 108, die über eine Antriebskette 109 von einem zentralen Antriebsmotor eines Längsvorschubantriebes 110 in Längsrichtung des Kanales 106 vorwärtsbewegt werden. An diesen beiden Laufkatzen 108 ist über Ketten 111 der Holzstamm 3 angehängt und wird während des Meßvorganges, wie durch einen Pfeil 112 angedeutet, an einer Meßvorrichtung 113 vorbei bewegt. Die beiden Laufkatzen 108 werden mit dem Längsvorschubantrieb 110 nach dem Vorbeiführen des Holzstammes 5 an der Meßeinrichtung 113 im Schnellgang - dies wird durch die unterschiedliche Länge des Pfeiles 114 zum Ausdruck gebracht - in ihre Ausgangsstellung zurückgeführt, um den nächsten Holzstamm 3 an der Meßeinrichtung 113 vorbeibewegen zu können. Mittels der Ketten 111 und der Laufkatzen 108 wird dabei auf den Holzstamm 3 nur eine in Richtung des Pfeiles 112 gerichtete Vorschubbewegung ausgeübt und das Gewicht bzw. die Masse des Holzstammes 3 wird durch das Wasserbad 105 aufgenommen, d. h., der Gegenstand 3 wird vom Wasser getragen. Dies führt dazu, daß der Holzstamm 3 während des Meßvorganges eine, seinem natürlichen Verlauf entsprechende Lage einnimmt und nicht durch die Schwerkraft verformt wird. Zur besseren Verständlichkeit des Wesens der vorliegenden Erfindung wurde der Holzstamm 3 mit einer vergrößert dargestellten Knickung in seinem Längsverlauf versehen.

Im Bereich von Meßwertaufnehmern 114 bzw. 115 sind in Seitenwänden 116 bzw. 117 des Kanales 106 Fenster 118 mit glasklaren transparenten bzw. durchscheinenden Scheiben angeordnet. Diese Fenster 118 können durch zwei im Abstand voneinander in der Seitenwand 116 bzw. 117 eingegossene Glasscheiben 119 gebildet sein. Zwischen den beiden Glasscheiben 119 sind die Meßwertaufnehmer 114 und 115 angeordnet.

Um sicherzustellen, daß die Glasscheiben 119 auf der Innenseite des Wasserbades 105 durch Ablagerungen nicht verunreinigt werden und eine einwandfreie Meßwertaufnahme möglich ist, ist diesen Fenstern 118 eine Reinigungsvorrichtung 120 zugeordnet, die in Art eines Scheibenwischers mittels einer Zylinderkolben-Anordnung in Richtung des Pfeiles 112 über die Glasscheibe 119 geführt werden kann. Eine gleichartige Anordnung ist auch dem Meßwertaufnehmer 114 zugeordnet.

Die Meßeinrichtung 113 besteht aus zwei Meßbalken. Im Meßbalken des Meßwertaufnehmers sind in einer einzeiligen Reihe knapp nebeneinander eine Vielzahl von strahlungsempfindlichen Elementen 121 angeordnet. Im gegenüberliegenden Meßbalken des Meßwertaufnehmers 115 sind diesen strahlungsempfindlichen Elementen 121, z. B. in Halbleiterbauweise aufgebaute Lichtempfänger, Lichtsender 122 zugeordnet, die eine Strahlungsquelle 123 bilden. Jeweils ein Lichtsender 122 und ein strahlungsempfindliches Element 121 liegen sich genau gegenüber, wie dies durch den Strahlengang 124 angedeutet ist.

Beim Hindurchbewegen des Holzstammes 3 mit der Fördereinrichtung 107 durch die zwischen den beiden Meßwertaufnehmern 114, 115 gebildete Meßfläche 125 kann das Maß 102, nämlich der Durchmesser des Holzstammes, ermittelt werden. Dabei ist die Anzahl der durch den Holzstamm 3 abgedeckten strahlungsempfindlichen Elemente 121 ein Äquivalent des Maßes 102, also im vorliegenden Fall des Durchmessers des Holzstammes 3. Dies deshalb, da wie am Beispiel des Strahlenganges 126 angedeutet, durch den Holzstamm 3 die Verbindung zwischen einem Lichtsender 122 und dem diesem gegenüberliegenden Empfänger 121 und somit der Strahlengang 126 unterbrochen ist. Durch die feststehende Anordnung der Meßwertaufnehmer 114, 115 relativ zur Wasseroberfläche im Wasserbad 105 und dem schwimmenden Holzstamm 104 kann während des Vorbeibewegens und der damit unterschiedlich erfolgten Abdeckung der strahlungsempfindlichen Elemente 121 neben dem Maß 102 auch die Außenkontur des Längsverlaufes des Holzstammes 104 mittels der einer Steuereinrichtung 127 nachgeordneten Auswerteeinheit 128 auf einem Anzeigefeld 129 bzw. einer Registriereinrichtung 130 ersichtlich gemacht werden. Dies ist insbesondere dann wichtig, wenn aus dem Holzstamm 3 Blockholz geschnitten werden soll, da scharfkantige Kanthölzer nur in jenem Volumsbereich des Holzstammes herausgeschnitten werden können, in dem über die gesamte Stammlänge keine Verwerfungen bzw. Knickungen oder dgl. vorhanden sind. Dadurch ist es in Verbindung mit der erfindungsgemäßen Einrichtung mit Vorteil möglich, ein optimales Schneideprogramm für das Schneiden von Holzstämmen 3 aufgrund ihrer natürlichen Kontur zu erhalten. Die Steuereinrichtung 127 umfaßt weiters ein Schaltglied 131, mit dem ein Meßvorgang ausgelöst werden kann und das gleichzeitig über ein Erregerglied 132 die Steuereinrichtung zur Aktivierung der Meßeinrichtung 113 und ein Steuermodul 133 zur Aktivierung des Längsvorschubantriebes 110 beaufschlagt. Durch die Kopplung eines Vorschubmelders 134, der in Abhängigkeit von einem Startsignalgeber 135 aktiviert wird, kann sowohl die Länge des Stammes 3, als auch die Meßwertermittlung in verschiedenen Längsbereichen des Holzstammes 3 mittels der Meßeinrichtung 113 gesteuert werden. Der Startsignalgeber 135 aktiviert den Vorschubmelder 134, wenn durch den Holzstamm 3 die ersten strahlungsempfindlichen Elemente 121 abgedeckt sind und unterbricht die Signalabgabe des Vorschubmelders 133 an die Steuereinrichtung 127, wenn keines der strahlungsempfindlichen Elemente mehr durch den Holzstamm 3 abgedeckt ist.

Sowohl die Lichtsender 122, als auch die strahlungsempfindlichen Elemente 121 befinden sich, wie aus Figur 4 deutlich ersichtlich, sowohl ober- als auch unterhalb einer Wasseroberfläche 136 des Wasserbades 105, wobei sich die Meßfläche 125 in etwa senkrecht zur Wasseroberfläche 136 erstreckt.

In Figur 5 ist eine Ausführungsvariante einer Anlage 137 zum Feststellen bzw. Überwachen der Maße 102 eines Gegenstandes 3 um Wasserbad 105 dargestellt.

Bei dieser Anlage 137 befinden sich die Meßwertaufnehmer 138, 139 innerhalb eines Kanales 140 und sind auf einer Längsführungsbahn, die durch Führungssäulen 141, 142 gebildet ist, mittels Rollenanordnungen und einem beispielsweise durch ein über einen Längsvorschubantrieb angetriebenes Seil 145 einer Längsvorschubvorrichtung 146 entlang des Kanales 140 verfahrbar. Zum Festhalten des Gegenstandes 3 während des Meßvorganges sind Vorrichtungen 147, z. B. ein Greifer 148, in beiden Endbereichen des Gegenstandes 3 vorgesehen. Um zu vermeiden, daß die Kontur bzw. der Längsverlauf des Gegenstandes 103 durch das Gewicht der Greifer 148 verändert wird, können diese mit einem Hubantrieb 149 verbunden sein, der beispielsweise über eine Steuereinrichtung 127 derart beaufschlagt wird, daß er eine dem Eigengewicht des Greifers 148 entsprechende Hubkraft auf diesen Greifer 148 ausübt.

Die Steuerung des Meßvorganges bzw. die Auswertung der erhaltenen Meßsignale kann entsprechend den Darlegungen zur Steuereinrichtung in Figur 4 erfolgen, wobei anstelle des Längsvorschubantriebes 110 der Längsvorschubantrieb 144 für die Meßwertaufnehmer 138, 139 beaufschlagt wird. Wie durch Pfeile 150 angedeutet, können die Meßwertaufnehmer 138, 139 beim Aufnehmen der Meßwerte mit einer geringeren Geschwindigkeit im Wasserbad 105 bewegt werden als bei der Rückstellung in die Ausgangsstellung zur Durchführung des nächsten Meßvorganges. Unter Umständen ist es auch nicht erforderlich, die Meßvorrichtung am Ende des Meßvorganges in eine Ausgangsstellung zurückzuführen, sondern bei gegengleicher Bewegung sofort den nachfolgenden Gegenstand zu vermessen.

In Figur 6 ist eine andere Anlage zum Ermitteln des Maßes 102 eines Gegenstandes 103 in einem Wasserbad 105 dargestellt. Das Wasserbad 105 befindet sich wieder in einem Kanal 106. In einem Querschnittsbereich dieses Kanales 106, der der Meßfläche 125 gemäß Figur 4 identisch ist und der im wesentlichen senkrecht zu einer Wasseroberfläche 152 verläuft, ist eine Meßeinrichtung mit mehreren mechanischen Meßwertaufnehmern 154, die inner- und außerhalb des Wasserbades 105 im Bereich des Umfanges des zu messenden Gegenstandes 3 angeordnet sind, vorgesehen. Jeder Meßwertaufnehmer 154 besteht aus einem elektromechanischen Wandler 155, z. B. einem Tauchpotentiometer oder einem Drehfeldgeber oder dgl. sowie einem Fühlerarm 156, an dessen dem Gegenstand 3 zugewandten Ende ein Rollelement 157 angeordnet ist. Durch die entsprechende Verstellung der Rollelemente 157 während dem Vorbeibewegen des Gegenstandes 103 - entweder durch Distanzveränderung der Rollelemente 157 gegenüber den Kanalwänden bzw. durch Verschwenkung der Fühlerarme 156 gegenüber ihren elektromechanischen Wandlern - kann sowohl die Abmessung 102 als auch die Kontur bzw. der Längsverlauf des Gegenstandes 3, während er vom Wasser getragen wird, ohne Beeinflussung durch die Schwerkraft festgestellt werden.

Der Vorschub des Gegenstandes 3 kann im vorliegenden Ausführungsbeispiel durch eine im Wasser erzeugte Strömung erfolgen, wozu im Kanal 106 Strömungsdüsen 158, die mit einer Hochdruckpumpe 159 gekuppelt sind, angeordnet sind. Mittels der Hochdruckpumpe 159 wird das Wasserbad 105 in eine in Längsrichtung des Kanal es gerichtete Strömung versetzt, sodaß der Gegenstand 3, beispielsweise Holzstamm 3, in Längsrichtung des Kanales mit gleichmäßiger Geschwindigkeit vorwärtsbewegt wird. Die Strömungsdüsen 158 und die Hochdruckpumpe 159 bilden einen Längsvorschubantrieb 160.

Die Ausbildung der in Verbindung mit der erfindungsgemäßen Anlage verwendeten Meßeinrichtungen 14, 15, 33, 69, 113 kann im Rahmen der Erfindung beliebig abgewandelt werden; so können anstelle der beschriebenen Lichtsender und strahlungsempfindlichen Elemente bzw. der mechanischen Meßwertaufnehmer auch beliebige andere Meßeinrichtungen, wie Lichtschranken, Ultraschallanordnungen bzw. Strahlungsquellen mit Lichtsendern, die durch eine punktförmige Lichtquelle oder beispielsweise auch durch einen Laser gebildet werden, eingesetzt werden.

Die Ausbildung der Meßeinrichtung bzw. der dazugehörigen Auswerteeinrichtungen kann mit Vorteil entsprechend den Ausführungen in unserem österreichischen Patent Nr. 351 282 (entspricht DE-AS-2 555 975) bzw. der DE-OS-3 238 883 (veröffentlicht am 7.7.83) erfolgen.

Auch die Ausbildung des Wasserbades so wie die zur Beförderung der Gegenstände vorgesehene Fördereinrichtung sind im Rahmen der Erfindung beliebig abwandelbar. So ist es möglich, natürliche Wasserläufe zur Aufnahme der Gegenstände ebenso heranzuziehen wie beispielsweise der Transport der Gegenstände, insbesondere Holzstämme, durch die Strömung des Wasserbades erfolgen kann.

Die erfindungsgemäßen Anlagen 1, 101 werden hauptsächlich zur Bestimmung des Längsverlaufes 4 von Holzstämmen 3 eingesetzt, wobei meist gleichzeitig ein Durchmesser 75 der Holzstämme in ein oder mehreren Meßebenen ermittelt wird.

**Patentansprüche**

1. Anlage (1) zum Aufnehmen und Vermessen eines Holzstammes oder dgl. (3) in waagrechter Lage mit einer Fördereinrichtung (50) sowie einer Steuereinrichtung (41), mit einer in einer horizontalen Ebene liegenden Aufnahmeeinrichtung (16, 64) mit Stützgliedern (18, 63) und mit einer Meßeinrichtung (14, 15, 33, 69) zum Vermessen des Holzstammes (3) oder dgl. in seinem Längsverlauf (4) in zumindest einer Raumrichtung gegenüber einer Bezugsgeraden bzw. -ebene (5 - 7, 65, 67), dadurch gekennzeichnet, daß ein Wasserbad (9) für den Holzstamm (3) oder dgl. vorhanden ist und daß die Stützglieder (18, 63) kraftfrei zumindest an die von der Wasseroberfläche (11) abgewendete, im Wasserbad (9) befindliche Unterseite (12) des Holzstammes (3) oder dgl. anlegbar sind.

2. Anlage (101) zum Aufnehmen und Vermessen eines Holzstammes (3) oder dgl. in waagrechter Lage mit einer Fördereinrichtung (107) sowie einer Steuereinrichtung (127), mit einer in einer horizontalen Ebene liegenden Aufnahmeeinrichtung und mit mindestens einer Meßeinrichtung (113) zum Vermessen des Holzstammes (3) oder dgl. in seinem Längsverlauf in zumindest einer Raumrichtung gegenüber einer Bezugsgeraden bzw. -ebene, dadurch gekennzeichnet, daß ein Wasserbad (105) angeordnet ist, welches die Aufnahmeeinrichtung für den Holzstamm (3) oder dgl. bildet und daß in einer parallel und bzw. oder senkrecht zur Wasseroberfläche (136, 152) verlaufenden Bezugsebene Meßeinrichtungen (113) für den im Wasserbad (105) befindlichen Holzstamm (3) oder dgl. angeordnet sind, mit welchen der Längsverlauf und/oder die Abmessung des Holzstammes (3) oder dgl. feststellbar ist.

3. Anlage nach Anspruch 1 oder 2, dadurch gekennzeichnet, daß die über ein Schaltglied (131) zur Meßwertermittlung aktivierbare Meßeinrichtung (14, 15, 33, 69; 113, 153) sowie der sich im Wasserbad (9, 105) befindliche und vom Wasser getragene Holzstamm (3) mittels der Fördereinrichtung (50, 107) relativ zueinander bewegbar sind.

4. Anlage nach einem der Ansprüche 1 bis 3, dadurch gekennzeichnet, daß die Meßeinrichtung (113) feststehend angeordnete Meßwertaufnehmer (114, 115; 154) umfaßt und die Fördereinrichtung (107) einen Längsvorschubantrieb (110, 160) umfaßt, mit dem der Holzstamm (3) oder dgl. senkrecht zu der Mefläche (125) bewegbar ist.

5. Anlage nach Anspruch 2, dadurch gekennzeichnet, daß die Fördereinrichtung (107) zwei in Längsrichtung (112, 150) voneinander distanzierte Vorrichtungen (147) zum Erfassen des Holzstammes (3) oder dgl., insbesondere Greifer (148) umfaßt, die mit dem Längsvorschubantrieb (146) gekoppelt sind und daß über das Schaltglied (131) gleichzeitig mit der Meßeinrichtung (113) von der Fördereinrichtung (107) der Längsvorschubantrieb (146) und gegebenenfalls ein Hubantrieb (149) mit einer dem Greifergewicht entsprechenden Kraft beaufschlagbar ist.

6. Anlage nach einem der Ansprüche 2 oder 5, dadurch gekennzeichnet, daß einer oberhalb der Wasseroberfläche (11, 136, 152) befindlichen Oberseite (13) des Holzstammes (3) oder dgl. außerhalb des Wasserbades (105) angeordnete Meßwertaufnehmer (28, 29, 114, 115, 138, 139, 154) zugeordnet sind.

7. Anlage nach einem der Ansprüche 2 oder 5, 6, dadurch gekennzeichnet, daß die Fördereinrichtung (107) mit Längspositioniervorrichtungen versehen ist, und daß einige Meßwertaufnehmer (114, 115; 138, 139; 154) unterhalb der Wasseroberfläche (136, 152), insbesondere innerhalb des Wasserbades (105) und einige über der Wasseroberfläche angeordnet und mit einer Längsvorschubvorrichtung (146) verbunden sind.

8. Anlage nach einem der Ansprüche 2 oder 5 - 7, dadurch gekennzeichnet, daß das Wasserbad (105) durch einen Kanal (106) oder ein Becken gebildet ist, in dessen Seitenwände (116, 117) zumindest im Bereich der Meßwertaufnehmer (114, 115) transparente Fenster (118) angeordnet sind.

9. Anlage nach einem der Ansprüche 2 oder 5 - 8, dadurch gekennzeichnet, daß der Längsvorschubantrieb (160) der Fördereinrichtung (107) durch eine vorzugsweise veränderbare Wasserströmung, z. B. Strömungsdüsen (158) mit einer Hochdruckpumpe (159), gebildet ist.

10. Anlage nach einem der Ansprüche 1 bis 9, dadurch gekennzeichnet, daß die Meßeinrichtung (113) durch eine Strahlungsquelle (123) und mit dieser zusammenwirkende strahlungsempfindliche Elemente (121) gebildet ist, wobei der Holzstamm (3) oder dgl. zwischen Strahlungsquelle (123) und den Elementen (121) hindurchbewegbar ist.

11. Anlage nach einem der Ansprüche 1 bis 9, dadurch gekennzeichnet, daß die Meßeinrichtung (33, 153) mechanische Meßwertaufnehmer (28, 154), insbesondere elektromechanische Wandler (34, 155) aufweist, und daß die Wandler in- und außerhalb des Wassers im Umfangsbereich des zu vermessenden Holzstammes (3) oder dgl. angeordnet sind und daß vorzugsweise diese Wandler (34, 155) Fühlerarme (35, 156) aufweisen, die in ihren Endbereichen mit Roll- bzw. Gleitelementen (157) versehen und mit dem Stützglied (18) verbunden sind oder am Holzstamm (3) anliegen.

12. Anlage nach einem der Ansprüche 1 bis 10, dadurch gekennzeichnet, daß die Meßeinrichtung (33, 113) eine durch einen Laser gebildete Strahlungsquelle (123) umfaßt.

13. Anlage nach einem der Ansprüche 1 bis 12, dadurch gekennzeichnet, daß der Meßeinrichtung (33, 113) bzw. den Seitenwänden (116, 117), vorzugsweise im Bereich der Fenster (118) eine Reinigungsvorrichtung (120) zugeordnet ist und daß vorzugsweise dem Wasserbad (105) eine Absonderungseinrichtung für Schwebekörper, insbesondere Holzrinden, zugeordnet ist.

14. Anlage nach Anspruch 1, dadurch gekennzeichnet, daß die Aufnahmeeinrichtung (16, 64) in einer parallel zur und unterhalb der Wasseroberfläche (11) verlaufenden Bezugsebene (6, 65) angeordnet und auf der Fördereinrichtung (50) oder einer Wand (23) des Wasserbadess (9) gelagert ist und daß die Stützglieder (63) der Aufnahmeeinrichtung Abstützvorrichtungen (19 - 22) mit in Richtung des Holzstammes (3) wirkenden Antrieben (26, 66) zugeordnet sind, die über die Steuereinrichtung (41) bedarfsweise in ihrer Stellung fixierbar sind.

15. Anlage nach Anspruch 1 oder 14, dadurch gekennzeichnet, daß die Abstützvorrichtungen (19, 22) durch Kolben-Zylinder-Anordnungen (25) gebildet sind, die insbesondere über eine Ventilanordnung (38) mit einer Druckmittelquelle (37) verbunden sind.

16. Anlage nach Anspruch 15, dadurch gekennzeichnet, daß die Druckmittelquelle (37) durch einen Druckmittelspeicher (39) gebildet ist, wobei vorzugsweise als Druckmittel Luft verwendet wird, und der Aufnahmeeinrichtung (16, 64) mit der Steuereinrichtung (41) wirkverbundene Bremsvorrichtungen (27), insbesondere für die Stützglieder (18, 63) zugeordnet sind.

17. Anlage nach Anspruch 1, dadurch gekennzeichnet, daß die den Stützgliedern (18, 63) zugeordneten Abstützvorrichtungen (19 - 22) unabhängig voneinander, im wesentlichen senkrecht zur Wasseroberfläche (11), verstellbar sind und daß die Stützglieder (18, 63) auf einer Führungsbahn in einer parallel zur Wasseroberfläche (11) verlaufenden Ebene quer zur Längsrichtung des Holzstammes (3) verstellbar und mit einem Blockierantrieb (71), der vorzugsweise auf der Abstützvorrichtung (19 - 22) gelagert ist, verbunden sind.

18. Anlage nach einem der Ansprüche 1 oder 2, dadurch gekennzeichnet, daß die Meßwertaufnehmer (28) der Meßeinrichtung (15) den Stützgliedern (18) der Aufnahmeeinrichtung (16, 64) zugeordnet oder durch diese gebildet sind und in einer vertikalen parallel zur und gegebenenfalls senkrecht zur Längsrichtung (17, 55) des Holzstammes (3) verlaufenden Bezugsebene (6) angeordnet sind.

19. Anlage nach Anspruch 1, dadurch gekennzeichnet, daß die Summe der Verstellkräfte (72) der Abstützvorrichtungen (19 - 22) geringer ist als die Auftriebskraft des Holzstammes (3) bzw. zumindest größer als die auf den Stützgliedern (18, 63) lastende Wassersäule (73) und daß vorzugsweise den Stützgliedern (18, 63) Auftriebskörper (74) zugeordnet sind.

20. Anlage nach Anspruch 1, dadurch gekennzeichnet, daß die Aufnahmeeinrichtung (16, 64) einen Teil der Fördereinrichtung (50) für den Holzstamm (3) bildet und auf einem verwindungssteifen Traggerüst (24, 52) angeordnet sind, welches auf einer Förderbahn (51) gelagert und mit einem Längsvorschubantrieb (53) verbunden ist, und daß im Zuge der Förderbahn (51) die Meßwertaufnehmer (68) der außerhalb des Wasserbades (9) angeordneten Meßeinrichtung (69) sich in einer senkrecht zur Förderrichtung (55) verlaufenden Meßebene (67) befinden.

21. Anlage nach einem der Ansprüche 1 bis 20, dadurch gekennzeichnet, daß eine aus Meßwertaufnehmern (68) gebildete Meßeinrichtung (69), insbesondere außerhalb des Wasserbades (9) angeordnet ist und die Steuereinrichtung (41) ein über ein Verzögerungsglied (45) verbundenes Einschaltglied (46) aufweist, wobei das Verzögerungsglied (45) und die Ventilanordnung (38) für die Abstützvorrichtungen (19 - 22) gleichzeitig beaufschlagt ist.

22. Anlage nach Anspruch 1, dadurch gekennzeichnet, daß die Meßwertaufnehmer (68) entlang einer Förderbahn (51) einer Fördereinrichtung (50) mit einem Verstellantrieb verfahrbar sind.

23. Verfahren zum Aufnehmen und Vermessen eines Holzstammes (3) oder dgl. in waagrechter Lage und in seinem Längsverlauf, mit einer Anlage gemäß einem der Ansprüche 1 bis 22, bei dem der Holzstamm (3) oder dgl. einem Wasserbad zugeführt wird, sodaß er freischwimmend vom Wasser getragen wird, worauf Stützglieder (18, 63) der Aufnahmeeinrichtung (16, 64) kraftfrei zumindest an die von der Wasseroberfläche (11) abgewendete, im Wasserbad (9) befindliche Unterseite (12) des Holzstammes (3) oder dgl. angelegt werden und der Holzstamm (3) oder dgl. gegenüber der Aufnahmeeinrichtung (16, 64) fixiert und der Längsverlauf in zumindest einer Raumrichtung gegenüber einer Bezugsgeraden bzw. -ebene (5, 6, 7, 65, 67) festgestellt wird.

24. Verfahren nach Anspruch 23, dadurch gekennzeichnet, daß den Stützgliedern (18, 63) Meßwertaufnehmer (28, 29, 68) zugeordnet sind und mit diesen der Längsverlauf (4) bzw. die Längskontur des Holzstammes (3) oder dgl. in mehreren aufeinanderfolgenden Bereichen gegenüber einer gedachten Bezugsgeraden (5) ermittelt wird, worauf die optimale Einspannposition für eine Bearbeitungsmaschine, z. B. eine Furnierschälmaschine bzw. ein Sägegatter festgelegt wird.

25. Verfahren nach Anspruch 23, dadurch gekennzeichnet, daß der Holzstamm (3) oder dgl. mit der Aufnahmeeinrichtung (16, 64) aus dem Wasserbad (9) herausgehoben und entlang einer definierten Bezugsgeraden (5) eine Meßvorrichtung und der zu vermessende Holzstamm (3) relativ zueinander verstellt werden, um Abweichungen der Oberfläche in mehreren Raumrichtungen relativ zu der Bezugsgeraden (5) sowie gegebenenfalls des Durchmessers (75) des Holzstammes (3) festzustellen.

## Claims

1. Installation (1) for receiving and measuring a tree trunk or the like (3) in a horizontal position, with a conveyor system (50) as well as a control system (41), with a reception system (16, 64) lying in a horizontal plane with support members (18, 63), and with a measuring system (14, 15, 33, 69) for measurement of the tree trunk (3) or the like in its longitudinal extension in at least one spatial direction with respect to a straight reference line or reference plane (5 - 7, 65, 67), characterised in that a water bath (9) is present for the tree trunk (3) or the like and that the support members (18, 63) can be made to bear, without force, at least against the underside (12) of the tree trunk (3) or the like which is present within the water bath (9) facing away from the water surface (11).

2. Installation (101) for receiving and measuring a tree trunk (3) or the like in a horizontal position, with a conveyor system (107) as well as a control system (27), with a reception system lying in a horizontal plane and with at least one measuring system (113) for measurement of the tree trunk (3) or the like in its longitudinal extension in at least one spatial direction with respect to a straight reference line or reference plane, characterized in that a water bath (105) is provided, which forms the reception system for the tree trunk (3) or the like and that measuring devices (113) for the tree trunk (3) or the like present in the water bath (105) are situated in a reference plane extending parallel and/or perpendicular to the water surface (136, 152), with which the longitudinal extension and/or the dimensions of the tree trunk (3) or the like can be established.

3. Installation according to claim 1 or 2, characterised in that the measuring system (14, 15, 33, 69; 113, 153) energisable via a switch element (131) to determine the measurement value, as well as the tree trunk (3) present in the water bath (9, 105) and borne by the watex, are displaceable relative to one another by means of conveyor system (50, 107).

4. Installation according to one of claims 1 to 3, characterized in that the measuring system (113) incorporates fixedly arranged measurement value sensors (114, 115; 154) and the conveyor system (107) incorporates a longitudinal feed drive (110, 160), by means of which the tree trunk (3) or the like can be displaced at right angles to the measuring surface (125).

5. Installation according to claim 2, characterized in that the conveyor system (107) comprises two devices (147) mutually spaced apart in the longitudinal direction (122, 150) for grasping the tree trunk (3) or the like, particularly grippers (148), which are coupled to the longitudinal feed drive (146) and that the longitudinal feed drive (146) and if appropriate a displacement drive (149) can be acted upon via the switch element (131), at the same time as the measuring system (113), by the conveyor system (107) with a force commensurate with the gripper weight.

6. Installation according to one of the claims 2 or 5, characterized in that measurement value sensors (28, 29, 114, 115, 138, 139, 154) situated outside the water bath (105) are associated with a top side (13) of the tree trunk (3) or the like positioned above the water surface (11, 136, 152).

7. Installation according to one of claims 2 or 5 and 6, characterized in that the conveyor system (107) is provided with longitudinal positioning devices and that some measurement value sensors (114, 115, 138, 139; 154) are arranged below the water surface (136, 152), in particular within the water bath (105), and some are arranged above the water surface, and are connected to a longitudinal feed mechanism (146).

8. Installation according to one of claims 2 or 5 to 7, characterized in that the water bath (105) is formed by a channel (106) or basin, in the sidewalls (116, 117) of which transparent windows (118) are positioned at least in the area of the measurement value sensors (114, 115).

9. Installation according to one of claims 2 or 5 to 8, characterized in that the longitudinal feed drive (160) of the conveyor system (107) is formed by a preferably variable water flow system, e.g. flow nozzles (158) with a high pressure pump (159).

10. Installation according to one of claims 1 to 9, chacterised in that the measurement system (113) is formed by a radiation source (123) and radiation-sensing elements (121) co-operating therewith, the tree trunk (3) or the like being displaceable to pass through between the radiation source (123) and the elements (121).

11. Installation according to one of claims 1 to 9, characterized in that the measurement system (33, 153) comprises mechanical measurement value sensors or pickups (28, 154), particularly electromechanical transducers (34, 155) and that the transducers are arranged within and outside the water in the peripheral area of the tree trunk (3) or the like to be measured, and that these transducers (34, 155) preferably comprise feeler arms (35, 156) which are provided in their end regions with rolling or sliding elements (157) and are connected to the support element (18) or bear against the tree trunk (3).

12. Installation according to one of claims 1 to 10, characterised in that the measurement system (33, 113) comprises a radiation source (123) formed by a laser.

13. Installation according to one of claims 1 to 12, characterised in that a cleaning device (120) is associated with the measurement system (33, 113) or with the sidewalls (116, 117), preferably in the area of the windows (118), and that a separating system for floating bodies, in particular wood bark, is preferably associated with the water bath (105).

14. Installation according to claim 1, characterised in that the reception system (16, 64) is arranged in a reference plane (6, 65) extending parallel to and below the water surface (11) and is installed on the conveyor system (50) or a wall (23) of the water bath (9) and that the support members (63) of the reception system are associated with support devices (19 - 22) comprising drives (26, 66), which operate in the direction of the tree trunk (3), which can if required be immobilised in their position via the control system (41).

15. Installation according to claim 1 or 14, characterised in that the support devices (19, 22) are formed by piston-cylinder systems (25) which in particular are connected to a pressure medium source (37) via a valve system (38).

16. Installation according to claim 15, characterised in that the pressure medium source (37) is formed by a pressure medium reservoir (39), wherein air is preferably utilised as a pressure medium, and braking means (27) effectively coupled to the control device (41) particularly for the support members (18, 63), are associated with the reception system (16, 64).

17. Installation according to claim 1, characterised in that the support devices (19, 22) associated with the support members (18, 63) are displaceable independently of each other, substantially at right angles to the water surface (11) and the support members (18, 63) are displaceable on a guiding track transversely to the longitudinal direction of the tree trunk (3) in a plane extending parallel to the water surface (11) and coupled to a locking drive (71) which is preferably situated on the support devices (19 - 22).

18. Installation according to one of claims 1 or 2, characterised in that the measurement value pickups (28) of the measurement system (15) are associated with or formed by the support elements (18) of the reception system (16, 64) and are situated in a vertical reference plane (6) extending parallel and if appropriate at right angles to the longitudinal direction (17, 55) of the tree trunk (3).

19. Installation according to claim 1, characterised in that the sum of the displacing forces (72) of the support devices (19, 22) is smaller than the buoyancy force of the tree trunk (3) or at least greater than the water column (73) bearing on the support elements (18, 63), and that buoyancy elements (74) are preferably associated with the support elements (18, 63).

20. Installation according to claim 1, characterised in that the reception system (16, 64) forms part of the conveyor system (50) for the tree trunk (3) and is installed on a torsionally rigid carrying frame (24, 52) which is mounted on a conveyor track (51) and coupled to a longitudinal feed drive (53) and that along the path of the conveyor track (51), the measurement value pickups (68) of the measurement system (69) situated outside the water both (9) are present in a measuring plane (67) extending at right angles to the conveying direction (55).

21. Installation according to one of claims 1 to 20, characterized in that a measurement system (69) formed by measurement value pickups (68) is situated outside the water bath (9) in particular, and that the control system (41) has an energising switch element (46) connected via a time-delay element (45), the time-delay element (45) and the valve system (38) for the support devices (19 - 22) being acted upon at the same time.

22. Installation according to claim 1, characterized in that the measurement value pickups (68) are transportable by means of a displacing drive along a conveyor track (51) of a conveyor system (50).

23. A method for the reception and measurement of a tree trunk (3) or the like in a horizontal position and in its longitudinal extension, with a plant according to one of claims 1 to 22, in which the tree trunk (3) or the like is conveyed to a water bath, so that it is borne by the water in a freely floating manner, whereupon support members (18, 63) of the reception system (16, 64) are brought to bear without force against at least the underside (12) of the tree trunk (3) or the like which is present within the water bath (9) and facing away from the water surface (11), and the tree trunk (3) or the like is immobilised relative to the reception system (16, 64) and the longitudinal extension is determined in at least one spatial direction with respect to a straight line or plane of reference (5, 6, 7, 65, 67).

24. Method according to claim 23, characterized in that measurement value pickups (28, 29, 68) are associated with the support members (18, 63) and in that with these the longitudinal extension (4) or the longitudinal profile of the tree trunk (3) or the like is determined in several consecutive regions with respect to a notional straight reference line (5), on the basis of which the optimum clamping position is determined for a processing machine, e.g. a veneer peeling machine or a saw frame.

25. Method according to claim 23, characterized in that the tree trunk (3) or the like is lifted out of the water bath (9) by means of the reception system (16, 64) and a measuring device and the tree trunk (3) which is to be measured are displaced relative to one another along a specified straight reference line (5) to determine deviations of the surface in several spatial directions relative to the straight reference line (5) as well as the diameter (75) of the tree trunk (3) if appropriate.

**Revendications**

1. Installation (1) pour supporter et mesurer un tronc d'arbre ou analogue (3) en position horizontale avec un dispositif de transport (50) ainsi qu'un dispositif de commande (41), avec un dispositif de support (16, 64) disposé dans un plan horizontal avec des éléments de soutien (18, 63) et avec un dispositif de mesure (14, 15, 33, 69) pour mesurer le tronc d'arbre (3) ou analogue dans son tracé longitudinal (4) dans au moins une direction spatiale par rapport à une droite ou un plan de référence (5 - 7, 65, 67), caractérisée en ce qu'un bain d'eau (9) est prévu pour le tronc d'arbre (3) ou analogue et en ce que les éléments de soutien (18, 63) peuvent être appliqués sans effort au moins sur le côté inférieur (12) du tronc d'arbre (3) qui se trouve dans le bain d'eau (9) et qui n'est pas du côté de la surface de l'eau (11).

2. Installation (101) pour supporter et mesurer un tronc d'arbre (3) ou analogue en position horizontale avec un dispositif de transport (107) ainsi qu'un dispositif de commande (127), avec un dispositif de support disposé dans un plan horizontal et avec au moins un dispositif de mesure (113) pour mesurer le tronc d'arbre (3) ou analogue dans son tracé longitudinal dans au moins une direction spatiale par rapport à une droite ou à un plan de référence, caractérisée en ce qu'un bain d'eau (105) est installé, lequel forme le dispositif de support pour le tronc d'arbre (3) ou analogue et en ce que, dans un plan de référence s'étendant parallèlement et/ou perpendiculairement à la surface de l'eau (136, 152), sont installés des dispositifs de mesure (113) pour le tronc d'arbre (3) ou analogue qui se trouve dans le bain d'eau (105), au moyen desquels le tracé longitudinal et/ou la dimension du tronc d'arbre (3) ou analogue peuvent être déterminés.

3. Installation selon la revendication 1 ou 2, caractérisée en ce que le dispositif de mesure (14, 15, 33, 69; 113, 153) qui peut être activé par l'intermédiaire d'un élément d'enclenchement (131) pour la détermination de la mesure ainsi que le tronc d'arbre (3) qui se trouve dans le bain d'eau (9, 105) et qui est porté par l'eau peuvent être déplacés l'un par rapport à l'autre au moyen du dispositif de transport (50, 107).

4. Installation selon l'une des revendications 1 à 3, caractérisée en ce que le dispositif de mesure (113) comporte des transducteurs (114, 115; 154) disposés de façon fixe et en ce que le dispositif de transport (107) comporte une commande d'avance longitudinale (110, 160) au moyen de laquelle le tronc d'arbre (3) ou analogue peut être déplacé perpendiculairement à la surface de mesure (125).

5. Installation selon la revendication 2, caractérisée en ce que le dispositif de transport (107) comporte deux dispositifs (147) à distance l'un de l'autre en direction longitudinale (112, 150) pour saisir le tronc d'arbre (3) ou analogue, en particulier des griffes (148), qui sont couplées à la commande d'avance longitudinale (146) et en ce que la commande d'avance longitudinale (146) et éventuellement une commande de levage (149) peuvent etre sollicitées avec une force correspondant au poids des griffes par l'intermédiaire de l'élément d'enclenchement (131) en même temps que le dispositif de mesure (113), par le dispositif de transport (107).

6. Installation selon l'une des revendications 2 ou 5, caractérisée en ce que des transducteurs (28, 29, 114, 115, 138, 139, 154) disposés à l'extérieur du bain d'eau (105) sont associés à un côté supérieur (13) du tronc d'arbre (3) ou analogue qui se trouve au-dessus de la surface de l'eau (11, 136, 152).

7. Installation selon l'une des revendications 2 ou 5, 6, caractérisée en ce que le dispositif de transport (107) est pourvu de dispositifs de positionnement en longueur, et en ce que quelques transducteurs (114, 115; 138; 139; 154) sont disposés au-dessous de la surface de l'eau (136, 152), en particulier à l'intérieur du bain d'eau (105) et en ce que quelques uns sont disposés au-dessus de la surface de l'eau et sont reliés à un dispositif d'avance longitudinale (146).

8. Installation selon l'une des revendications 2 ou 5 à 7, caractérisée en ce que le bain d'eau (105) est formé par un canal (106) ou par un bassin, dans les parois latérales (116, 117) duquel sont disposées des fenêtres transparentes (118) au moins dans le domaine des transducteurs (114, 115).

9. Installation selon l'une des revendications 2 ou 5 à 8, caractérisée en ce que la commande d'avance longitudinale (160) du dispositif de transport (107) est formée par un écoulement d'eau de préférence modifiable, par exemple, par des buses d'écoulement (158) avec une pompe à haute pression (159).

10. Installation selon l'une des revendications 1 à 9, caractérisée en ce que le dispositif de mesure (113) est formé par une source de rayonnement (123) et par des éléments (121) sensibles au rayonnement coopérant avec celle-ci, le tronc d'arbre (3) ou analogue étant déplaçable entre la source de rayonnement (123) et les éléments (121).

11. Installation selon l'une des revendications 1 à 9, caractérisée en ce que le dispositif de mesure (33, 153) présente des transducteurs mécaniques (28, 154), en particulier des convertisseurs électromécaniques (34, 155), et en ce que les convertisseurs sont disposés dans et à l'extérieur de l'eau dans le domaine de la périphérie du tronc d'arbre (3) ou analogue à mesurer, et en ce que ces convertisseurs (34, 155) comportent de préférence des bras palpeurs (35, 156), qui sont équipés au voisinage de leurs extrémités d'éléments roulants ou glissants (157) et qui sont reliés à l'élément de soutien (18) ou qui sont appliqués sur le tronc d'arbre (3).

12. Installation selon l'une des revendications 1 à 10, caractérisée en ce que le dispositif de mesure (33, 113) comporte une source de rayonnement (123) formée par un laser.

13. Installation selon l'une des revendications 1 à 12, caractérisée en ce qu'un dispositif de nettoyage (120) est associé au dispositif de mesure (33, 113) ou aux parois latérales (116, 117), de préférence dans le domaine des fenêtres (118) et en ce que de préférence un dispositif de séparation pour les corps flottants, en particulier l'écorce, est associé au bain d'eau (105).

14. Installation selon la revendication 1, caractérisée en ce que l'installation de support (16, 64) est disposée dans un plan de référence (6, 65) s'étendant parallèlement à et sous la surface de l'eau (11) et est disposée sur le dispositif de transport (50) ou sur une paroi (23) du bain d'eau (9) et en ce que les éléments de soutien (63) du dispositif de support sont associés à des dispositifs de support (19 - 22) avec des commandes (26, 66) agissant en direction du tronc d'arbre (3), qui en cas de besoin peuvent etre fixés dans leur position par l'intermédiaire du dispositif de commande (41).

15. Installation selon la revendication 1 ou 14, caractérisée en ce que les dispositifs de soutien (19, 22) sont formés par des dispositifs à cylindre et piston (25), qui sont reliés à une source de fluide sous pression (37), en particulier par l'intermédiaire d'un dispositif à vanne (38).

16. Installation selon la revendication 15, caractérisée en ce que la source de fluide sous pression (37) est formée par un réservoir de fluide sous pression (39), de l'air étant de préférence utilisé en tant que fluide sous pression, et en ce que des dispositifs de freinage (27) en particulier pour les éléments de soutien (18, 63), liés quant à l'effet au dispositif de commande (41), sont associés au dispositif de support (16, 64).

17. Installation selon la revendication 1, caractérisée en ce que les dispositifs de soutien (19 - 22) associés aux éléments de soutien (18, 63) sont déplaçables indépendamment les uns des autres essentiellement perpendiculairement à la surface de l'eau (11) et en ce que les éléments de soutien (18, 63) sont déplaçables sur une voie de guidage dans un plan s'étendant parallèlement à la surface de l'eau (11) perpendiculairement à la direction longitudinale du tronc d'arbre (3) et sont liés avec une commande de blocage (71) qui est disposée de préférence sur le dispositif de soutien (19 - 22).

18. Installation selon l'une des revendications 1 ou 2, caractérisée en ce que les transducteurs (28) du dispositif de mesure (15) sont associés aux éléments de soutien (18) du dispositif de support (16, 64) ou sont formés par ceux-ci et sont disposés dans un plan de référence (6) vertical s'étendant parallèlement et éventuellement perpendiculairement à la direction longitudinale (17, 55) du tronc d'arbre (3).

19. Installation selon la revendication 1, caractérisée en ce que la somme des forces de déplacement (72) des dispositifs de soutien (19 - 22) est plus faible que la force de poussée verticale du tronc d'arbre (3) ou au moins est plus grande que la colonne d'eau (73) pesant sur les éléments de soutien (18, 63) et en ce que de préférence des flotteurs (74) sont associés aux éléments de soutien (18, 63).

20. Installation selon la revendication 1, caractérisée en ce que le dispositif de support (16, 64) forme une partie du dispositif de transport (50) pour le tronc d'arbre (3) et est disposé sur un cadre porteur (24, 52) résistant aux torsions, lequel est disposé sur une voie de transport (51) et est relié à une commande d'avance longitudinale (53), et en ce que dans le trajet de la voie de transport (51) les transducteurs (68) du dispositif de mesure (69) qui se trouve à l'extérieur du bain d'eau (9) se trouvent dans un plan de mesure (67) s'étendant perpendiculairement à la direction de transport (55).

21. Installation selon l'une des revendications 1 à 20, caractérisée en ce qu'un dispositif de mesure (69) formé par des transducteurs (68), est disposé en particulier à l'extérieur du bain d'eau (9) et en ce que le dispositif de commande (41) présente un élément d'enclenchement (46) relié par l'intermédiaire d'un élément temporisateur (45), l'élément temporisateur (45) et le dispositif à vanne (38) pour les dispositifs de soutien (19 - 22) étant sollicités en même temps.

22. Installation selon la revendication 1, caractérisée en ce que les transducteurs (68) sont déplaçables par une commande de déplacement le long d'une voie de transport (51) d'un dispositif de transport (50).

23. Procédé pour supporter et mesurer un tronc d'arbre (3) ou analogue en position horizontale et dans son tracé longitudinal, avec un dispositif selon l'une des revendications 1 à 22, selon lequel le tronc d'arbre (3) ou analogue est placé dans un bain d'eau, de sorte qu'il est porté librement par l'eau, après quoi les éléments de soutien (18, 63) du dispositif de support (16, 64) sont appliqués sans effort au moins sur le côté inférieur (12) du tronc d'arbre (3) ou analogue qui n'est pas tourné vers la surface de l'eau (11), et qui se trouve dans le bain d'eau (9) et en ce que le tronc d'arbre (3) ou analogue est fixé par rapport au dispositif de support (16, 64) et le tracé longitudinal est déterminé au moins dans une direction spatiale par rapport à une droite ou un plan de référence (5, 6, 7, 65, 67).

24. Procédé selon la revendication 23, caractérisé en ce que des transducteurs (28, 29, 68) sont associés aux éléments de soutien (18, 63) et en ce qu'au moyen de ceux-ci, le tracé longitudinal (4) ou le contour longitudinal du tronc d'arbre (3) ou analogue est déterminé dans plusieurs domaines successifs par rapport à une droite de référence (5) idéale, après quoi la position de serrage optimale pour une machine de transformation, par exemple une machine à dérouler le bois ou une scie à cadre est déterminée.

25. Procédé selon la revendication 23, caractérisé en ce que le tronc d'arbre (3) ou analogue est tiré hors du bain d'eau (9) au moyen du dispositif de support (16, 64) et en ce que le long d'une droite de référence définie (5), un dispositif de mesure et le tronc d'arbre (3) à mesurer sont déplacés l'un par rapport à l'autre pour déterminer des écarts de la surface dans plusieurs directions spatiales par rapport à la droite de référence (5) ainsi qu'éventuellement du diamètre (75) du tronc d'arbre (3).

16

# Fig.1

Fig. 2

Fig.3

EP 0 108 260 B1

# Fig. 4

# Fig. 5

# Fig. 6